# EUROPÄISCHE PATENTANMELDUNG

(11) **EP 4 703 051 A1**
(43) Veröffentlichungstag der Anmeldung: **04.03.2026**
(21) Anmeldenummer: 24197582.0
(22) Anmeldetag: 30.08.2024
(51) Int. Cl.: B05D 5/00, C08G 18/08, C08G 18/10, C08G 18/40, C08G 18/42, C08G 18/44, C08G 18/48, C08G 18/73, C08G 18/75, C08G 18/79, C09D 175/04, C09D 175/06

(54) **WÄSSRIGE DISPERSION ZUR REPARATURBESCHICHTUNG UNPOLARER OBERFLÄCHEN SOWIE VERFAHREN ZUR REPARATURBESCHICHTUNG**

(71) Anmelder: Valspar Industries GmbH, 01099 Dresden (DE); SYNTHOPOL CHEMIE Dr. rer. pol. Koch GmbH & CO. KG, 21614 Buxtehude (DE)
(72) Erfinder: de Zeeuw, Ard, 40593 Düsseldorf (DE); Endres, Holger, 41470 Neuss (DE); Simon, Rolf, 21614 Buxtehude (DE); Spohnholz, Rüdiger, 22523 Hamburg (DE)
(74) Vertreter: Vossius & Partner Patentanwälte Rechtsanwälte mbB

(57) **Zusammenfassung**

Die vorliegende Erfindung betrifft die Reparaturbeschichtung unpolarer Oberflächen, insbesondere lackierter Metalloberflächen, mittels einer im Sprühverfahren aufgetragenen wässrigen Dispersion eines Polyurethanharzes. Die erfindungsgemäße wässrige Dispersion weist optimale Benetzungseigenschaften und eine gute Sprühbarkeit auf, so dass der Einsatz zur Reparaturbeschichtung auch bei großen Stückzahlen und einer konstant hohen Durchsatzleistung gewährleistet ist. Die erfindungsgemäße Dispersion enthält hierfür ein Säuregruppen-aufweisendes Polyurethanharz, ein nicht-ionisches oder anionisches organisches Tensid sowie ein Substratnetzmittel. In einem weiteren Aspekt betrifft die Erfindung auch ein Verfahren zur Reparaturbeschichtung unter Verwendung der wässrigen Dispersion.

## Beschreibung

Die vorliegende Erfindung betrifft die Reparaturbeschichtung unpolarer Oberflächen, insbesondere lackierter Metalloberflächen, mittels einer im Sprühverfahren aufgetragenen wässrigen Dispersion eines Polyurethanharzes. Die erfindungsgemäße wässrige Dispersion weist optimale Benetzungseigenschaften und eine gute Sprühbarkeit auf, so dass der Einsatz zur Reparaturbeschichtung auch bei großen Stückzahlen und einer konstant hohen Durchsatzleistung gewährleistet ist. Die erfindungsgemäße Dispersion enthält hierfür ein Säuregruppen-aufweisendes Polyurethanharz, ein nicht-ionisches oder anionisches organisches Tensid sowie ein Substratnetzmittel. In einem weiteren Aspekt betrifft die Erfindung auch ein Verfahren zur Reparaturbeschichtung unter Verwendung der wässrigen Dispersion.

Mit Lacken versehene aus Metallblechen geformte Behältnisse werden in lebensmittelverpackenden Endverbraucherindustrien mannigfaltig eingesetzt. Ein für Lebensmittelverpackungen nahezu ubiquitär eingesetztes Material ist dabei Weißblech, also verzinntes Stahlblech. Während die mit dem Lebensmittel unmittelbar in Kontakt stehenden Innenflächen einer aus Weißblech geformten Verpackung zur Konservierung des lebensmitteltypischen Aromas lackiert sind, erhalten die Außenflächen eine bedruckbare Lackierung, um die Verpackung nach dem Wunsch des Lebensmittelherstellers gestalten zu können. Sowohl Innen- als auch Außenbeschichtung müssen regelmäßig sterilisationsfähig sein, d.h. eine unter den gewählten Sterilisationsbedingungen ausreichende Haftung zum metallischen Verpackungsmaterial aufweisen, da anderenfalls einerseits unerwünschte geschmackliche Veränderungen des Lebensmittels eintreten und andererseits korrosive Prozesse ein Anlaufen der Oberfläche verursachen und den ästhetisch hochwertigen Eindruck der verpackten Ware beeinträchtigen.

Nun haben sich zur Steigerung des Komforts für den Endverbraucher solche Metallverpackungen im Handel durchgesetzt, die bereits vorgeprägte Öffnungen aufweisen, so dass dem Verbraucher die Entnahme des Lebensmittels deutlich erleichtert wird. Hierfür ist bei Konservendosen oftmals im mit dem Dosenzylinder durch Bördeln verbundenen Verschlussdeckel eine kreisrunde, nahe an der Bördelung verlaufende Einkerbung eingelassen, entlang der sich das Dosendeckelblech mit Hilfe einer Aufreißlasche leicht und vollständig entfernen lässt. Industriell wird das Dosendeckelmaterial aus bereits vorbeschichtetem Bandmaterial durch Stanzen und Pressen hergestellt und dabei die vorgeprägte Öffnung mit angelegt, so dass an der Einkerbungsstelle die Blechstärke des Aufreißdosendeckels zwar wie gewünscht reduziert, aber gleichzeitig auch die Beschichtung mit dem Dosendeckellack verletzt ist. Dies macht wiederum eine Nachbehandlung der aus Weißblech gefertigten Dosen erforderlich, in deren Verlauf aus Kostengründen idealerweise lediglich im Bereich der Einkerbung eine neuerliche Lackierung aufgebracht wird. Ohne Reparaturbeschichtung würde der Dosendeckellack im Bereich der Einkerbung auf dem Weißblech bereits nach der Sterilisationsbehandlung korrosiv unterwandert und damit einhergehend der ästhetische Eindruck in einem vom Endverbraucher nicht akzeptablem Maße beeinträchtigt sein.

Die Reparaturbeschichtung erfolgt im Stand der Technik durch Auftrag eines lösemittelbasierten oder lösemittelhaltigen Lackes im Bereich der Dosendeckeleinkerbung und dies aufgrund der geforderten hohen Durchsatzleistung bei den Stückzahlen nahezu ausschließlich mittels Sprühapplikationsverfahren. Wesentliche Eigenschaft des Lackes ist daher seine Sprühfähigkeit. Ebenso ist für eine gleichmäßige Verfilmung des Reparaturlackes in der Einbrennstufe bei der Fertigung solcher Dosendeckel unabdingbar, dass der Reparaturlack die Dosendeckeloberfläche, insbesondere im Bereich der Einkerbung, unmittelbar nach dem Lackauftrag vollständig benetzt, d.h. durch Spreitung der durch Sprühen aufgebrachten Flüssigkeitstropfen ein kontinuierlicher Film des Reparaturlackes in Sekundenbruchteilen ausgebildet wird, der dabei auch in den Bereich des zu reparierenden Lackdefekts möglichst vollständig eindringt. Bei der Aushärtung des auf dem Dosendeckel aufgebrachten Reparaturlackes gilt es zudem den Energieverbrauch gering zu halten und dafür eine niedrige Einbrenntemperatur zur Verfilmung und Aushärtung des Reparaturlackes zu realisieren. Derartige Lackeigenschaften werden im Stand der Technik bisher über eine geeignete Auswahl an leichtflüchtigen Lösemitteln und Härtern für das zumeist Epoxid-basierte Bindemittelsystem eingestellt. Die schnelle Aushärtung erfolgt dann mittels solcher Härter, die bei den bereits genannten möglichst niedrigen Einbrenntemperaturen ausreichend mit dem Bindemittelsystem vernetzen. Bindemittel und Härter eines Reparaturlackes, insofern bereits zur Applikation vermischt, besitzen daher eine nur kurze Verarbeitungszeit, was bei Anlagenstillstand zu berücksichtigen ist und dann eine sofortige Reinigung der Applikationsgeräte, beispielsweise Sprühdüsen, erforderlich macht.

Gegenüber dem Stand der Technik stellt sich vorliegende Erfindung die Aufgabe einen wasserbasierten und weitestgehend lösemittelfreien Reparaturlack mit dennoch hohen Benetzungseigenschaften zu etablieren, der eine vergleichsweise hohe Verarbeitungszeit aufweist und dennoch bei den üblicherweise angestrebten Einbrenntemperaturen von weniger als 160 °C, idealerweise weniger als 100 °C, vollständig ausgehärtet werden kann. Der Reparaturlack muss geeignet sein in den Defektbereich, der bei der zuvor genannten Aufreißdosendeckelfertigung vorzugsweise eine rillenförmige, üblicherweise weniger als 1 Millimeter breite Vertiefung in der lackierten Metalloberfläche darstellt, einzudringen und vollständig auszufüllen.

Die vorliegende Erfindung löst diese Aufgabe, indem eine wässrige Dispersion zur Reparaturbeschichtung unpolarer Oberflächen in Sprühverfahren (im Folgenden auch "Reparaturlack" genannt) bereitgestellt wird, die einen Festkörperanteil nach DIN EN ISO 3251 von mindestens 10,0 Gew.-% aufweist und
(A) mindestens ein in Wasser dispergiertes Polyurethanharz ausgewählt aus Polyurethanharzen mit einer Säurezahl von mindestens 5 mg KOH pro Gramm,
(B) mindestens einen in Wasser gelösten Härter ausgewählt aus organischen Verbindungen mit mindestens einer Carbodiimid-Gruppe,
(C) mindestens ein nicht-ionisches oder anionisches Tensid ausgewählt aus organischen Verbindungen mit einem Molgewicht von weniger als 1000 g/mol,
(D) mindestens ein Substratnetzmittel, das keine organische Verbindung gemäß der Komponente (C) darstellt,
enthält.

In einem weiteren Aspekt betrifft die vorliegende Erfindung sodann ein Verfahren zur Reparaturbeschichtung einer lackierten Metalloberfläche, die in zumindest einem Bereich der Lackierung einen Defekt aufweist, der darin besteht, dass gegenüber der außerhalb dieses Defektbereiches realisierten Lackschichtdicke eine mindestens reduzierte vorliegt, bei dem zur Erhöhung der Lackschichtdicke im Defektbereich zumindest dort eine erfindungsgemäße wässrige Dispersion als Nassfilm aufgebracht und anschließend eingetrocknet wird (im Folgenden auch "Reparaturbeschichtungsverfahren" genannt). Die im Folgenden genauer spezifizierten erfindungsgemäß bevorzugten Reparaturlacke stellen analog bevorzugte Ausführungsformen im erfindungsgemäßen Reparaturbeschichtungsverfahrens unter Verwendung dieser Reparaturlacke dar.

Der Festkörperanteil des erfindungsgemäßen Reparaturlackes nach DIN EN ISO 3251 liegt für ein ausreichendes Schichtgewicht im zu reparierenden Defektbereich nach der Verfilmung und Aushärtung des Lackfilms bei mindestens 10,0 Gew.-%, vorzugsweise bei mindestens 15,0 Gew.- % bezogen auf den Reparaturlack. Da der Reparaturlack vorzugsweise, wie bei der Aufreißdosendeckelfertigung üblich, im Sprühen aufzutragen ist und die dabei erforderlichen hohen Durchsatzzahlen es erfordern, dass ein zur Reparatur ausreichendes Flüssigkeitsvolumen innerhalb von Sekundbruchteilen auf den Dosendeckel aufgesprüht werden muss, ist es vorteilhaft und daher bevorzugt, wenn die Viskosität des Lackes niedrig gehalten wird und der Festkörperanteil des Reparaturlackes dafür unterhalb von 30,0 Gew.-%, besonders bevorzugt unterhalb von 25,0 Gew.-%, insbesondere bevorzugt unterhalb von 20,0 Gew.% liegt. In diesem Zusammenhang ist vorteilhaft und daher bevorzugt, wenn der Reparaturlack eine dynamische Viskosität unterhalb von 200 mPas1, besonders bevorzugt unterhalb von 120 mPas1, insbesondere bevorzugt unterhalb von 80 mPas⁻¹ aufweist, jeweils gemessen nach Brookfield mit Spindel 2 bei einer Scherung von 60 rpm (rounds per minute).

Der Reparaturlack ist erfindungsgemäß als wässrige Dispersion bereitgestellt. Eine solche Dispersion liegt vor, wenn der Festkörperanteil des Lackes zumindest teilweise, insbesondere das Polyurethanharz gemäß Komponente (A), in der kontinuierlichen wasserbasierten Phase partikulär dispergiert vorliegt. In diesem Zusammenhang hat sich für eine gute Verfilmung der Harzbestandteile sowie für das Eindringen der derselben in den auszuheilenden Defektbereich der lackierten Metalloberfläche als vorteilhaft erwiesen, wenn die wässrige Dispersion, vorzugsweise das in Wasser dispergierte Polyurethanharz gemäß Komponente (A), einen D90 Wert von weniger als 1,00 µm, besonders bevorzugt von weniger als 0,50 µm, insbesondere bevorzugt von weniger als 0,25 µm aufweist. Der D90-Wert bezeichnet im Rahmen der vorliegenden Erfindung den Teilchendurchmesser den 90 Vol.-% der in der wässrigen Dispersion enthaltenden partikulären Bestandteile nicht überschreiten. Der D90-Wert kann gemäß ISO 13320:2009 mittels Streulichtanalyse nach der Mie-Theorie aus volumengewichteten kumulativen Partikelgrößenverteilungen unmittelbar nach Verdünnung der Dispersion auf einen Festkörperanteil von 1,0 Gew.-% mit einer entsprechenden Menge an entionisiertem Wasser (κ < 1µScm⁻¹) bei 20 °C bestimmt werden, wobei sphärische Partikel zugrunde gelegt werden.

Der erfindungsgemäße Reparaturlack ist über die Menge des mindestens einen Substratnetzmittels gemäß Komponente (D), das kein Tensid im Sinne der Komponente (C) darstellt, vorzugsweise so eingestellt, dass der Reparaturlack eine statische Oberflächenspannung von weniger als 30,0 mNm⁻¹, besonders bevorzugt von weniger als 25,0 mNm⁻¹, ganz besonders bevorzugt von weniger als 22,0 mNm⁻¹ gemessen nach der Platin-Ring-Methode bei 20°C aufweist. Dafür liegt die Menge zumindest eines nicht-ionischen Tensides gemäß Komponente (C) in der wässrigen Dispersion vorzugsweise über seiner kritischen Mizellbildungskonzentration. Hierüber wird ermöglicht, dass unpolare Oberflächen ausreichend benetzt werden, und auf diese Weise im Kontext des Reparaturbeschichtungsverfahrens sichergestellt ist, dass eine lackierte Metalloberfläche, oder im Speziellen ein beschichteter Weißblechdosendeckel, im Defektbereich beziehungsweise im Bereich der Aufreißeinkerbung, überhaupt erfolgreich nachbeschichtet werden kann.

Der erfindungsgemäße Reparaturlack ist über die Menge des mindestens eines Tensides gemäß Komponente (C), das kein Substratnetzmittel im Sinne der Komponente (D) darstellt, vorzugsweise so eingestellt, dass der Reparaturlack eine dynamische Oberflächenspannung von weniger als 45,0 mNm⁻¹, besonders bevorzugt von weniger als 40,0 mNm⁻¹, insbesondere bevorzugt von weniger als 35,0 mNm⁻¹ gemessen mittels Blasendruck-Tensiometer bei 20°C und einem Oberflächenalter von 0,030 Sekunden aufweist. Auf diese Weise wird erreicht, dass ein durch Sprühen aufgebrachter Flüssigkeitsfilm des Reparaturlackes seine durch die statische Oberflächenspannung und die lackierte Metalloberfläche vorgegebene maximale Spreitung in Sekundenbruchteilen erfährt, so dass ein Eindringen des Reparaturlackes in seiner ursprünglichen Zusammensetzung in den auszuheilenden Defektbereich vor der thermischen Behandlung der lackierten und mit dem Reparaturlack versehenen Metalloberfläche gewährleistet ist.

Im Folgenden werden bevorzugte Ausführungsformen des erfindungsgemäßen Reparaturlackes anhand der einzelnen obligaten Komponenten (A)-(D) erläutert und eingeführt.

### Komponente (A) - Polyurethanharz

Wie bereits erwähnt liegt der Festkörperanteil des Reparaturlackes bei mindestens 10 Gew.-%. Dieser Festkörperanteil wird im Wesentlichen von den Komponenten (A) und (B) getragen, wobei für eine ausreichende Menge des Bindemittel bestehend aus den Polyurethanharzen nach Komponente (A) diese vorzugsweise mit einem Anteil von mindestens 4 Gew.-%, vorzugsweise mindestens 8 Gew.-%, besonders bevorzugt mindestens 12 Gew.-% im Reparaturlack und bezogen auf diesen enthalten sind. Aus den hier bereits erwähnten Gründen der Notwendigkeit sprühbare Reparaturlacke mit hoher Stabilität gegenüber Agglomeration der partikulären Bestandteile bereitzustellen, ergeben sich auch für den Anteil der Polyurethanharze nach Komponente (A) bevorzugte Obergrenzen von vorzugweise 30 Gew.-% und besonders bevorzugt von 20 Gew.-% jeweils bezogen auf den Reparaturlack.

Erfindungsgemäß gefordert ist, dass das in dispergierter Form im Reparaturlack vorliegende Polyurethanharz eine Säurezahl von mindestens 5 mg KOH pro Gramm des Harzes aufweist. Die Säuregruppen sind zum einen erforderlich für eine gute Dispergierbarkeit und damit Stabilität des Reparaturlackes und zum anderen findet über die Säuregruppen die Vernetzung mit dem Carbodiimid-Gruppen aufweisenden Härter statt und damit die Aushärtung des im Defektbereich aufgetragenen und während des Einbrennvorgangs bereits verfilmten Reparaturlackes. Um die Stabilität des Lackes weitergehend zu verbessern und seine schnelle Aushärtung weiter zu unterstützen, ist es bevorzugt, wenn der Polyurethanharz eine Säurezahl von mindestens 8 mg KOH pro Gramm, vorzugsweise von mindestens 10 mg KOH pro Gramm jeweils bezogen auf den Harz aufweist. Höhere Säurezahlen können für die Barriereeigenschaften des ausgehärteten Reparaturlackes nachteilig sein, was wiederum die Einwanderung von korrosiven, in Wasser gelösten Salzen in den Reparaturlack ermöglicht sowie deren Transport bis an die Metalloberfläche im eigentlich ausgeheilten Defektbereich der lackierten Metalloberfläche, so dass Korrosionsphänomene wie das farbliche Anlaufen der Metalloberfläche dort trotz Reparaturlackbeschichtung auftreten können. Konsequenterweise wird der Anteil an Säuregruppen vorteilhafterweise auf das erforderliche Maß reduziert und es ist insofern bevorzugt, wenn das mindestens eine Polyurethanharz des erfindungsgemäßen Reparaturlackes eine Säurezahl nicht oberhalb von 30 mg KOH pro Gramm, besonders bevorzugt nicht oberhalb von 24 mg KOH pro Gramm, insbesondere bevorzugt nicht oberhalb von 24 mg KOH pro Gramm jeweils bezogen auf das Harz aufweist. Die Säurezahl wird nach DIN EN ISO 2114 bestimmt.

Das Hauptanwendungsfeld der erfindungsgemäßen Reparaturlacke liegt im Marktsegment der Lebensmittelverpackungen. In diesem Kontext ist es aus lebensmittelhygienischen Gründen bevorzugt auf Polyurethane, die aus aromatischen Isocyanaten oder aromatischen Polyolen hergestellt werden, zu verzichten. Erfindungsgemäß bevorzugt ist daher, wenn das dispergierte Polyurethanharz ausgewählt ist aus aliphatischen Polyurethanharzen, wiederum bevorzugt aus solchen aliphatischen Polyurethanharzen, die auf Basis von aliphatischen Polyetherpolyolen, aliphatischen Polyesterpolyolen, aliphatischen Polycarbonatdiolen und/oder aliphatischen Polyoxyalkylen-modifizierten Alkandiolen, insbesondere bevorzugt auf Basis von aliphatischen Polycarbonatdiolen durch Additionsreaktion mit aliphatischen Isocyanaten zugänglich sind.

Bevorzugte aliphatische Isocyanate sind Di- und/oder Triisocyanate, besonders bevorzugt aliphatische Diisocyanate mit 4 bis 15 Kohlenstoffatomen im aliphatischen Rest, die wiederum bevorzugt ausgewählt sind aus 1,6-Hexamethylendiisocyanat, 1,4-Diiso-cyanatocyclohexan, 1-Isocyanato-3,5,5-trimethyl-5-isocyanatomethylcyclohexan.

Bevorzugte aliphatische Polycarbonatdiole sind erhältlich durch Umsetzung von zwei- und/ oder dreiwertigen Alkoholen mit 2 bis 24, insbesondere 3 bis 10 Kohlenstoffatomen, typischerweise 1,6-Hexandiol, Neopentylglykol, 1,4-Dimethanol-Cyclohexan oder deren Gemischen mit Dimethylcarbonat (DMC). Ebenso geeignet sind Polyester- oder Polyethercarbonatdiole. Hier werden niedermolekulare lineare aliphatische Polyester- oder Polyetherpolyole als Starter verwendet und obiger Umsetzung unterzogen. Alternativ können aliphatische Polycarbonatdiole auch direkt aus Kohlendioxid und einem aliphatischen zwei- oder dreiwertigen Alkohol erhalten werden.

Insbesondere bevorzugt ist für die Bereitstellung von guten Barriereeigenschaften des ausgehärteten Reparaturlackes, wenn aus den zuvor genannten Edukten, also Isocyanaten und Polyolen, zunächst Polyurethan-Präpolymere (im Folgenden "Prä-PU" genannt) mit einem Überschuss an Isocyanat-Gruppen gebildet werden, der sodann mit Alkoholen, die zusätzlich eine Säurefunktion aufweisen, zum Polyurethanharz umgesetzt wird. Auf diese Weise kann die Anzahl der Säuregruppen im Polyurethanharz, auf die für die Vernetzung und Stabilisierung notwendige Menge reduziert werden. Erfindungsgemäß bevorzugt sind daher solche Polyurethanharze als Komponente (A), die erhältlich sind durch Umsetzen eines freie Isocyanat-Gruppen aufweisenden aliphatischen Präpolymers (im Folgenden auch "ali-Prä-PU" genannt) mit einen aliphatischen Alkohol, der mindestens eine Carboxyl- und/oder Sulfonat-Gruppe aufweist und vorzugsweise ausgewählt ist aus Dimethylol-C2- bis C6-Alkansäuren und besonders bevorzugt ausgewählt ist aus Dimethylolpropionsäure. Das in diesem Kontext erwähnte freie Isocyanat-Gruppen aufweisenden Präpolymer ali-Prä-PU ist wiederum vorzugsweise erhältlich durch Umsetzen mindestens eines aliphatischen Di- oder Triisocyanats, vorzugsweise aliphatischen Diisocyanats, mit mindestens einem mehrwertigen Alkohol ausgewählt aus aliphatischen Polyetherpolyolen, aliphatischen Polyesterpolyolen, aliphatischen Polycarbonatdiolen und/oder aliphatischen Polyoxyalkylen-modifizierten Alkandiolen, besonders bevorzugt aliphatischen Polycarbonatdiolen, wobei die Umsetzung in einem solchen Mengenverhältnis zu erfolgen hat, dass aus der Summe der eingesetzten Isocyanate und der Summe der eingesetzten Alkohole ein molares Verhältnis NCO/OH von größer 1,1:1, jedoch vorzugsweise nicht größer als 2,5:1 resultiert. In einer besonderen Ausführungsform ist das freie Isocyanat-Gruppen aufweisenden Präpolymer ali-Prä-PU erhältlich durch Umsetzen mindestens eines aliphatischen Di- oder Triisocyanats, vorzugsweise aliphatischen Diisocyanats, mit mindestens zwei aliphatischen mehrwertigen Alkoholen, wobei mindestens ein mehrwertiger Alkohol ausgewählt ist aus der Gruppe bestehend aus aliphatischen Polyetherpolyolen, aliphatischen Polyesterpolyolen und/oder aliphatischen Polycarbonatdiolen, besonders bevorzugt aus aliphatischen Polycarbonatdiolen, und mindestens ein weiterer mehrwertiger Alkohol ausgewählt ist aus aliphatischen Polyoxyalkylen-modifizierten Alkandiolen, wobei die Umsetzung in einem solchen Mengenverhältnis zu erfolgen hat, dass aus der Summe der eingesetzten Isocyanate und der Summe der eingesetzten Alkohole ein molares Verhältnis NCO/OH von größer 1,1:1, jedoch vorzugsweise nicht größer als 2,5:1 resultiert.

Die auf die geschilderte Weise aus den Prä-PUs erhältlichen mit Säuregruppen-modifizierten Polyurethanharze können nach der Dispergierung in Wasser weiter vernetzt werden, was wiederum für die Barrierewirkung des Reparaturlackes vorteilhaft ist, sofern die Stabilität der Dispersion weiterhin gegeben ist. Hierfür erfolgt die Umsetzung des Prä-PU mit dem aliphatischen Alkohol, der mindestens eine Carboxyl- und/oder Sulfonat-Gruppe aufweist, zunächst unterstöchiometrisch, so dass freie Isocyanat-Gruppen im umgesetzten Prä-PU verbleiben, das sodann unter zumindest teilweise bis vollständigen Abreagieren der Isocyanat-Gruppen zu einem Polyurethanharz gemäß Komponente (A) kettenverlängert wird.

In einer besonders bevorzugten Ausführungsform ist das mindestens eine Polyurethanharz gemäß Komponente (A) daher erhältlich durch Kettenverlängerung eines aliphatischen Säuregruppen-modifizierten Polyurethan-Präpolymers (im Folgenden auch "ali-sPrä-PU" genannt) , das durch Umsetzung mindestens eines aliphatischen Diisocyanates mit sowohl mindestens einem aliphatischen Polycarbonatpolyol als auch mindestens einem aliphatischen Alkohol, der mindestens eine Carboxyl- und/oder Sulfonat-Gruppe aufweist, wobei das NCO/OH Verhältnis aus der Summe der Isocyanate und der Summe der Alkohole im Bereich von 1,1 : 1 bis 2,5 : 1 liegt, erhältlich ist, und wobei die Kettenverlängerung vorzugsweise nach Dispergierung des zumindest teilneutralisierten ali-sPrä-PU in wässriger Phase durch Zugabe einer Menge eines oder mehrerer di- und mehrfunktioneller wasserlöslicher Alkohole, Amine und Aminoalkohole, vorzugsweise durch Zugabe einer Menge eines Diamins wie Ethylendiamin und/oder eines Triamins wie Ethylentriamin, erfolgt.

Das dispergierte oder die dispergierten Polyurethanharze gemäß Komponente (A) vernetzen, wie bereits erwähnt, über die Säuregruppen mit dem Härter gemäß Komponente (B) und die Polyurethanharze werden daher vorzugsweise so bereitgestellt, dass insgesamt weniger als 0,20 Gew.-%, vorzugsweise weniger als 0,05 Gew.-% an freien NCO-Gruppen bestimmt nach DIN 53185 und jeweils bezogen auf den Harzbestandteil gemäß Komponente (A) des Reparaturlackes enthalten sind.

### Komponente (B) - Härter

Für die gute Vernetzung des Reparaturlackes bestehend aus den zuvor detailliert beschriebenen Polyurethanharzen, die in Wasser dispergiert vorliegen, und um dabei niedrige Einbrenntemperaturen realisieren zu können, sind organische Verbindungen aus der Gruppe der Carbodiimide als Härter unerlässlich und daher erfindungsgemäß obligat vorgesehen.

Zu diesen Zweck geeignet sind Polycarbodiimiden mit zwei oder mehr Carbodiimid-Gruppen, die daher bevorzugte Härter des Reparaturlackes sind. Solche Polycarbodiimide sind wiederum vorzugsweise erhältlich aus Diisocyanaten, vorzugsweise aus aliphatischen Diisocyanaten, und mindestens einem Amin, vorzugsweise aliphatischem Amin, und/oder einem Polyether, vorzugsweise einem Polyalkylenglykol, besonders bevorzugt einem Polyethylenglykol. Die Verwendung aliphatischer Polycarbodiimide ist zur Gewährleistung lebensmittelhygienischer Vorschriften im Kontext der vorliegenden Erfindung bevorzugt, daher sind ebenso bevorzugt, die zuvor erwähnten Ausgangsprodukte der Polycarbodiimide gemäß Komponente (B) aliphatisch.

Als besonders vorteilhaft im Kontext der vorliegenden Erfindung haben sich solche Härter gemäß Komponente (B) erwiesen, die aus Carbodiimiden mit einem Carbodiimid-Äquivalentgewicht von weniger als 500 Gramm pro Mol Carbodiimid-Gruppen, jedoch von vorzugsweise mindestens 200 Gramm, besonders bevorzugt mindestens 300 Gramm pro Mol Carbodiimid-Gruppen, ausgewählt sind, wobei die Carbodiimide zusätzlich vorzugsweise eine zahlenmittlere Molmasse von mindestens 1.500 g/mol, jedoch vorzugsweise unterhalb von 50.000 g/mol aufweisen. Derartige Verbindungen vermögen den Reparaturlack bereits bei Temperaturen deutlich unterhalb des Siedepunkts von Wasser zu vernetzen, so dass in erfindungsgemäßen Reparaturbeschichtungsverfahren bereits in der Eintrocknungsphase des Nassfilms die Aushärtung in Lösung beginnt, was die Ausbildung einer möglichst homogenen, gut vernetzten Reparaturbeschichtung begünstigt.

Der Gesamtanteil an in Wasser gelösten Härtern sollte auf die Menge des Polyurethanharzes gemäß Komponente (A) derart angepasst sein, dass weit über- oder unterstöchiometrische Anteile vermieden werden, da anderenfalls aufgrund der Überschüsse an Härter oder Harz eine geringere Härte und Schutzwirkung der Reparaturbeschichtung erzielt wird. Üblicherweise, und daher bevorzugt, beträgt der Gesamtanteil an in Wasser gelösten Härtern gemäße Komponente (B) in erfindungsgemäßen Reparaturlacken mindestens 0,50 Gew.-%, besonders bevorzugt mindestens 1,00 Gew.-%, insbesondere bevorzugt mindestens 1,50 Gew.-%, jedoch liegt der Gesamtanteil vorzugsweise nicht oberhalb von 5,0 Gew.-%, besonders bevorzugt nicht oberhalb von 3,0 Gew.- %, insbesondere bevorzugt nicht oberhalb von 2,50 Gew.-% jeweils bezogen auf den Reparaturlack.

### Komponente (C) - Tensid

Der erfindungsgemäße Reparaturlack muss nahezu instantan nach seiner Applikation, idealerweise zumindest vor einer beginnenden Eintrocknung des Nassfilms, den zu reparierenden Defektbereich einer lackierten Metalloberfläche vollständig benetzen, um zu gewährleisten, dass der Reparaturlack in sämtliche auszuheilenden Stellen in der Lackierung eindringt und dieser Defektbereich somit vollständig vom Reparaturlack bedeckt ist. Denn nur auf diese Weise wird nach dem Eintrocknen und Einbrennen des Reparaturlackes die ursprüngliche Lackierung auch tatsächlich dort, wo sie verletzt, also eingerissen, abgetragen oder ausgedünnt ist, ausgeheilt. Wie eingangs erwähnt gilt es hierzu die dynamische Oberflächenspannung des wässrigen Reparaturlackes entsprechend zu reduzieren, möglichst unterhalb von als 45,0 mNm⁻¹, so dass erfindungsgemäß die Anwesenheit zumindest eines nicht-ionisches oder anionisches Tensides obligat ist, das zugleich eine organische Verbindung mit einem Molgewicht von weniger als 1.000 g/mol aufweist.

Die eingesetzten Tenside sollten vorzugsweise solche mit nicht-schäumenden bzw. entschäumenden Eigenschaften sein, da anderenfalls eine Sprühapplikation des Reparaturlackes nicht möglich wäre. Geeignete bevorzugte nicht-ionische Tenside sind Fettaminalkoxylate und/oder Fettalkoholalkoxylate. Geradzahlige Fettalkohole sind wegen deren besseren biologischen Abbaubarkeit bevorzugt. Der Fettalkohol kann ein C6 bis C22 Fettalkohol, bevorzugt ein C6 bis C18 Fettalkohol, besonders bevorzugt ein C6 bis C12 Fettalkohol sein. Der Fettalkohol kann verzweigt oder linear sein, wobei der hydrophobe Rest bevorzugt verzweigt ist. Der Fettalkohol kann gesättigt, einfach ungesättigt oder mehrfach ungesättigt sein, wobei vollständig gesättigte Reste bevorzugt sind. Der Fettalkohol kann ausgewählt sein aus der Gruppe bestehend aus 1-Hexanol, 1-Heptanol, 1-Octanol, 1-Decanol, 1-Dodecanol, 1- Tetradecanol, 1-Hexadecanol, 1-Heptadecanol, 1-Octadecanol, 1-Eicosanol, 1-Docosanol und Kombinationen davon.

Bevorzugt als Komponente (C) einzusetzende Tenside sind jedoch Aniontenside und dort wiederum bevorzugt solche, die mindestens eine Sulfonat- und/oder Sulfatgruppe und besonders bevorzugt ausschließlich aliphatische Reste aufweisen, wobei wiederum bevorzugt die Summe der Kohlenstoffatome aller aliphatischen Reste zumindest 6, vorzugsweise zumindest 8 beträgt. Diese Tensid-Gruppe ist in der Lage die dynamische Oberflächenspannung in besonderen Maße zu reduzieren. Überraschenderweise wurde des Weiteren gefunden, dass insoweit Substratnetzmitteln gemäß Komponente (D) enthalten sind, die auf Siloxanen beruhen, eine besonders gute Benetzung von unpolaren Oberflächen mit dem Reparaturlack und dies in Sekundenbruchteilen gelingt, wenn die zuvor genannten Aniontenside, die Sulfonat- und/oder Sulfatgruppe aufweisen, eingesetzt werden. In diesem Zusammenhang und ganz allgemein im Kontext des erfindungsgemäßen Lackes sind insbesondere solche Aniontenside hervorzuheben, die ausgewählt sind aus organischen Verbindungen der allgemeinen Strukturformel (I) sowie deren wasserlöslichen Salze, vorzugsweise Alkali- und/oder Erdalkalimetallsalze: 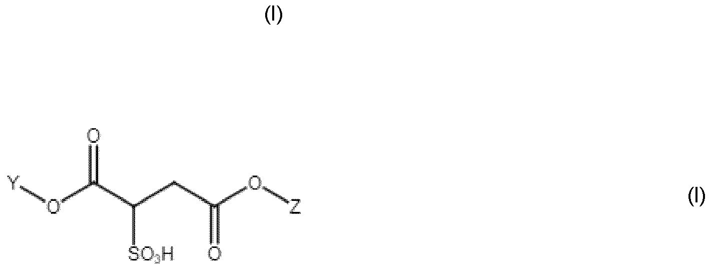 wobei Y und Z aliphatische Reste mit jeweils zumindest 4 Kohlenstoffatomen, vorzugsweise mit jeweils mindestens 6 Kohlenstoffatomen, jedoch jeweils nicht mehr als 14 Kohlenstoffatomen, vorzugsweise jeweils nicht mehr als 10 Kohlenstoffatomen darstellen, die jeweils verzweigt oder unverzweigt vorliegen können und unabhängig voneinander ausgewählt werden können. Ganz besonders bevorzugt ist die Sulfobernsteinsäure-bis(2-ethylhexyl)-ester sowie deren wasserlöslichen Salze, vorzugsweise Alkali- und/oder Erdalkalimetallsalze als Tensid gemäß Komponente (C) des Reparaturlackes ausgewählt. Aniontenside gemäß der allgemeinen Strukturformel (I) reduzieren die dynamische Oberflächenspannung des Reparaturlackes zuverlässig auf Werte unterhalb von 40,0 mNm⁻¹, wobei in Anwesenheit von Siloxanen als Substratnetzmittel gemäß Komponente (D) eine weitergehende Reduktion auf weniger als 30,0 mNm⁻¹ jeweils bestimmt bei 20 °C mittels Blasentensiometer bei einem Oberflächenalter von 0,030 Sekunden erreicht werden kann.

Zur Erzielung des gewünschten Effekts, der in der schnellen Benetzung unpolarer Oberflächen durch den Reparaturlack besteht, ist es vorteilhaft, wenn zumindest ein Tensid gemäß der Komponente (C) oberhalb seiner Mizellbildungskonzentration eingesetzt wird, besonders bevorzugt liegt der Anteil des Tenside gemäß der Komponente (C) im Reparaturlack bei mindestens 0,10 Gew.-%, vorzugsweise bei mindestens 0,20 Gew.-%, besonders bevorzugt bei mindestens 0,40 Gew.-%, jedoch übersteigt er vorzugsweise keine 2,00 Gew.-%, besonders bevorzugt keine 1,50 Gew.-% jeweils bezogen auf den Reparaturlack.

### Komponente (D) - Substratnetzmittel

Der erfindungsgemäße Reparaturlack muss bestimmungsgemäß eine ausreichende Benetzung unpolaren Oberflächen bewirken. Eine unpolare Oberfläche im Kontext der vorliegenden Erfindung liegt dann vor, wenn sie einen polaren Oberflächenenergieanteil gemessen bei 20 °C nach dem statischen Verfahren und berechnet nach der OWRK-Methode (Owens-Wendt-Rabel-Kaelble) gemäß der DIN EN ISO 19403-2 von weniger als 5,0 mJm⁻² aufweist. Wie eingangs erwähnt gilt es hierfür, die statische Oberflächenspannung des wässrigen Reparaturlackes entsprechend zu reduzieren, möglichst unterhalb von als 30,0 mNm⁻¹, so dass erfindungsgemäß die Anwesenheit zumindest eines Substratnetzmittels gemäß Komponente (D) des Reparaturlackes obligat ist.

Die zusätzlich zu den Tensiden gemäß Komponente (C) eingesetzten Substratnetzmittel sind in keiner Weise eingeschränkt und können alle Verbindungen sein, die geeignet sind, die statische Oberflächenspannung zu senken. Jedoch hat sich herausgestellt, dass Siloxane in besonderen Maße und dies speziell im Zusammenwirken mit den Aniontensiden gemäß Komponente (C), die Sulfonat- und/oder Sulfatgruppen enthalten, die Benetzungseigenschaften des Reparaturlackes positiv beeinflussen. In einer bevorzugten Ausführungsform des Reparaturlackes ist das mindestens eine Substratnetzmittel daher ausgewählt aus Siloxanen, wobei die Siloxane wiederum vorzugsweise aus Trisiloxanen und/oder Polysiloxanen ausgewählt sind und besonders bevorzugt mindestens eine [-Si(CH₃)₂-O] Struktureinheit aufweisen. Ganz besonders bevorzugt sind die Siloxane dabei ausgewählt aus Polyether-modifizierten Siloxanen, vorzugsweise aus polyoxoalkylierten, besonders bevorzugt aus polyethoxylierten Siloxanen.

Zur Erzielung des gewünschten Effekts, der in einer möglichst vollständigen und/oder schnellen Benetzung unpolarer Oberflächen durch den Reparaturlack besteht, ist es vorteilhaft, wenn der Anteil an Substratnetzmitteln, vorzugsweise der Anteil der Siloxane, besonders bevorzugt der Anteil der Polyether-modifizierten Siloxane, mindestens 0,05 Gew.-%, besonders bevorzugt mindestens 0,10 Gew.-%, insbesondere bevorzugt mindestens 0,20 Gew.-% beträgt, jedoch vorzugsweise nicht oberhalb von 1,00 Gew.-%, besonders bevorzugt nicht oberhalb von 0,60 Gew.-% jeweils bezogen auf den Reparaturlack liegt.

### Lösemittel

Die Anwesenheit organischer Lösemitteln in der wässrigen Dispersion des Reparaturlackes kann besondere Vorteile in der Vernetzung des Polyurethan-basierten Bindemittels erbringen, dadurch, dass ein zügiges Eintrocknen des applizierten Reparaturlackes beim Aufheizen der reparaturbeschichteten Bauteile, beispielsweise beim Transfer in den Einbrennofen, realisiert wird und die Aushärtung des Bindemittels somit in einer bereits aufkonzentrierten Dispersion einsetzt, was wiederum eine schnellere und vollständigere Vernetzung bedingt. Insofern ist erfindungsgemäß bevorzugt, wenn der Reparaturlack insgesamt mindestens 2,0 Gew.-%, vorzugsweise insgesamt mindestens 4,0 Gew.-% der Lösemittel Aceton, Methylethylketon, Dimethylsulfoxid und/oder N.N'-Dimethylformamid enthält, wobei vorzugsweise Methylethylketon als Lösemittel ausgewählt ist.

Andererseits ist es gerade ein gewünschtes Charakteristikum des Reparaturlackes, dass er weitestgehend lösemittelfrei formuliert werden kann, denn dies reduziert die CO₂ Äquivalentemissionen bei der Fertigung hoher Stückzahlen, wie bei der Reparaturbeschichtung von Aufreißdosendeckeln, signifikant. Diese Anforderung an den Reparaturlack wird unbeschadet der zuvor erwähnten Nützlichkeit eines gewissen Lösemittelanteils auch in Form der erfindungsgemäß bereitgestellten wässrigen Dispersion erfüllt. Konsequenterweise enthält der Reparaturlack aus umwelthygienischen Gründen bevorzugt insgesamt weniger als 10,0 Gew.-%, besonders bevorzugt insgesamt weniger als 8,0 Gew.-%, insbesondere bevorzugt insgesamt weniger als 6,0 Gew.-% der Lösemittel Aceton, Methylethylketon, Dimethylsulfoxid und/oder N.N'-Dimethylformamid, und vorzugsweise insgesamt weniger als 10,0 Gew.-%, besonders bevorzugt insgesamt weniger als 8,0 Gew.-%, insbesondere bevorzugt insgesamt weniger als 6,0 Gew.-% an organischen Verbindungen mit einem Siedepunkt unterhalb von 160°C bei Normaldruck (1013 mbar).

In einer besonders bevorzugten Ausführungsform enthält der Reparaturlack mindestens 2,0 Gew.- %, besonders bevorzugt mindestens 4,0 Gew.-% an Methylethylketon, jedoch insgesamt weniger als 10,0 Gew.-%, vorzugsweise insgesamt weniger als 8,0 Gew.-%, besonders bevorzugt insgesamt weniger als 6,0 Gew.-% an organischen Verbindungen mit einem Siedepunkt unterhalb von 160°C bei Normaldruck (1013 mbar) jeweils bezogen auf den Reparaturlack.

### Weitere fakultative Bestandteile

Der erfindungsgemäße Reparaturlack kann weitere lacktypische Additive enthalten. Hervorgehoben seien an dieser Stelle UV Tracer zur Kontrolle einer vollständigen Benetzung des Reparaturlackes im Defektbereich, Entschäumer zur Vermeidung der Schaumbildung bei Applikation des Reparaturlackes in Airless-Sprühverfahren, Haftvermittler wie Silane, die insbesondere die Adhäsion des Reparaturlackes zur lackierten Metalloberfläche verbessern, und Hautverlängerungsmittel wie Butyldiglykol zur Verlängerung der offenen Zeit beim Einbrennen des Reparaturlackes.

In einer besonders bevorzugten Ausführungsform des erfindungsgemäßen Reparaturlackes sind
(A) 4 - 30 Gew.-% an mindestens einen in Wasser dispergierten Polyurethanharz ausgewählt aus Polyurethanharzen mit einer Säurezahl von mindestens 5 mg KOH pro Gramm,
(B) 0,50 - 5,0 Gew.-% an mindestens einen in Wasser gelösten Härter ausgewählt aus organischen Verbindungen mit mindestens einer Carbodiimid-Gruppe,
(C) mindestens ein anionisches Tensid mit einem Molgewicht von weniger als 1000 g/mol ausgewählt aus organischen Verbindungen gemäß der allgemeinen Strukturformel (I) sowie deren wasserlösliche Salze, vorzugsweise Alkali- und/oder Erdalkalimetallsalze: 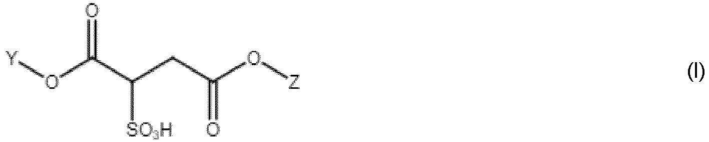 wobei Y und Z aliphatische Reste mit jeweils zumindest 4 Kohlenstoffatomen, vorzugsweise mit jeweils mindestens 6 Kohlenstoffatomen, jedoch jeweils nicht mehr als 14 Kohlenstoffatomen, vorzugsweise jeweils nicht mehr als 10 Kohlenstoffatomen darstellen, die jeweils verzweigt oder unverzweigt vorliegen können und unabhängig voneinander ausgewählt werden können,
(D) mindestens ein Siloxan, vorzugsweise ausgewählt sind aus Polyether-modifizierten Siloxanen, besonders bevorzugt aus polyoxoalkylierten, insbesondere bevorzugt aus polyethoxylierten Siloxanen,
(E) mindestens 2 Gew.-% an Methyletherketon enthalten,
wobei der Reparaturlack einen Festkörperanteil nach DIN EN ISO 3251 von mindestens 10,0 Gew.-% aufweist, jedoch insgesamt weniger als 10 Gew.-% an organischen Verbindungen mit einem Siedepunkt unterhalb von 160°C bei Normaldruck (1013 mbar) jeweils bezogen auf den Reparaturlack enthält.

In einem weiteren Aspekt betrifft die vorliegende Erfindung das eingangs beschriebene Reparaturbeschichtungsverfahren. Im Folgenden werden daher bevorzugte Ausführungsformen eines solchen erfindungsgemäßen Verfahrens anhand ausgewählter Aspekte erläutert und eingeführt.

Im Rahmen des erfindungsgemäßen Reparaturbeschichtungsverfahrens gelten die lackierten Metalloberflächen als unpolar, wenn ihr polarer Oberflächenenergieanteil gemessen bei 20 °C nach dem statischen Verfahren und berechnet nach der OWRK-Methode gemäß der DIN EN ISO 19403-2 kleiner als 5,0 mJm⁻², vorzugsweise kleiner als 2,0 mJm⁻², besonders bevorzugt kleiner als 1,0 mJm⁻² ist. Derartige Oberflächen sind üblicherweise über herkömmliche Lacke realisiert, die entsprechend additiviert sind, beispielsweise mit Wachsen. Bevorzugt im erfindungsgemäßen Verfahren behandelte lackierte Metalloberflächen weisen eine Lackierung mit einem organischen Bindemittelsystem, besonders bevorzugt ausgewählt aus Epoxiden, Acrylaten, Polyestern, Polyurethanen und/oder Polyolefinen, ganz besonders bevorzugt ausgewählt aus Epoxiden, auf.

Die Art des Defektbereiches, der im Rahmen des Reparaturbeschichtungsverfahrens eine Erhöhung der Lackschichtdicke erfährt, ist unerheblich für die Eignung des Verfahrens zur Ausheilung des Defektes. So können Punktdefekte wie auch flächige oder linienförmige Defektbereiche erfolgreich durch Applikation einer erfindungsgemäßen Reparaturlackes reparaturbeschichtet bzw. ausgeheilt werden. Die Eigenschaften des Reparaturlackes sind jedoch derart, dass insbesondere schmale Vertiefungen oder Risse in der ursprünglichen Lackierung des metallischen Substrates durch den Reparaturlack aufgrund der hervorragenden Benetzung gut erreichbar sind und effektiv reparaturbeschichtet werden können.

In einer bevorzugten Ausführungsform des Reparaturbeschichtungsverfahrens verläuft der Defektbereich daher entlang einer rillenförmigen Vertiefung in der Lackierung, wobei die Breite der Vertiefung orthogonal zum Rillenverlauf und zur Oberflächennormalen vorzugsweise geringer als 1000 µm, besonders bevorzugt geringer als 500 µm, jedoch vorzugsweise nicht geringer als 20 µm ist. Derartige Defekte sind typischerweise diejenigen, die bei der Herstellung von Aufreißdosendeckeln beim Anlegen der Soll-Öffnung in das lackierte metallische Dosendeckelmaterial eingeprägt werden und damit die Einkerbung und damit reparaturbedürftige Verletzung im bereits lackierten Dosendeckel bedingen. Das erfindungsgemäße Verfahren ist daher besonders geeignet für die Reparaturbeschichtung von Aufreißdosendeckeln und wird bevorzugt dort eingesetzt, insbesondere in der lebensmittelverpackenden Industrie, die dafür auf aus Aluminium, Stahl und Weißblech gefertigten Deckeln zurückgreift, wobei für die beiden letzteren in besonderen Maße das Problem der korrosiven Unterwanderung im Bereich der Prägung der Soll-Öffnung und damit eines farblichen Anlaufens des aus Stahl oder Weißblech gefertigten Deckels besteht. Die Reparaturbeschichtung im erfindungsgemäßen Verfahren kann dem effektiv entgegenwirken.

In einer bevorzugten Ausführungsform des Reparaturbeschichtungsverfahrens ist die lackierte Metalloberfläche daher eine Stahl-, Weißblech- oder Aluminiumoberfläche, insbesondere eine Weißblechoberfläche, wobei die lackierte Metalloberfläche vorzugsweise die Oberfläche eines Dosendeckels, insbesondere eines Weißblechdosendeckels, darstellt.

Die Applikationsart des Reparaturlackes als Nassfilm ist im erfindungsgemäßen Verfahren in keinerlei Weise eingeschränkt und alle herkömmlichen Beschichtungsverfahren wie Tauchen, Walzenauftragsverfahren, Spin-Coating etc. sind möglich, jedoch ist der Reparaturlack in besonderem Maße geeignet durch Sprühverfahren aufgebracht zu werden, denn gerade im Kontext der Dosendeckelfertigung sind hohe Durchsatzzahlen fertigungstypisch und erfordern Sprühtechniken zur dosierten, bestenfalls nur lokalen im Bereich des durch Reparaturbeschichtung auszuheilenden Defektes erfolgenden Applikation des Reparaturlackes.

In einer bevorzugten Ausführungsform des Reparaturbeschichtungsverfahrens wird der Reparaturlack daher im Sprühverfahren, dabei besonders bevorzugt durch Zerstäubung, insbesondere bevorzugt durch luftlose Zerstäubung, sogenannte Airless-Sprühverfahren, aufgebracht. Die Auftragung des Reparaturlackes erfolgt dabei vorzugweise bei einem Sprühdruck von mindestens 10 bar, besonders bevorzugt mindestens 15 bar, jedoch liegt der Sprühdruck vorzugsweise unterhalb von 30 bar, um einen zielgerichteten Auftrag nicht durch Bildung eines Sprühnebels zu erschweren.

Die Eintrocknung des aufgebrachten Nassfilms des Reparaturlackes und dessen Aushärtung erfolgt im erfindungsgemäßen Verfahren vorzugsweise in einer Wärmebehandlungsstufe, bei einer Temperatur (PMT = Peak Metal Temperature) von vorzugsweise oberhalb von 60 °C, besonders bevorzugt oberhalb von 80 °C, insbesondere bevorzugt oberhalb von 90 °C, jedoch vorzugsweise unterhalb von 160°C, besonders bevorzugt unterhalb von 130°C und insbesondere bevorzugt unterhalb von 100 °C. Das erfindungsgemäße Verfahren zeichnet sich gerade darin aus, dass bei Temperaturen bereits unterhalb des Siedepunktes von Wasser eine vollständige Aushärtung des Bindemittels erfolgen kann, so dass das Reparaturbeschichtungsverfahren ungeachtet der Tatsache, dass der Reparaturlack eine wässrige Dispersion darstellt, mit geringen Energieverbrauch betrieben werden kann.

Durch die vorliegende Erfindung werden u.a. die folgenden Gegenstände bereitgestellt:
1. Wässrige Dispersion zur Reparaturbeschichtung unpolarer Oberflächen in Sprühverfahren enthaltend
   (A) mindestens ein in Wasser dispergiertes Polyurethanharz ausgewählt aus Polyurethanharzen mit einer Säurezahl von mindestens 5 mg KOH pro Gramm,
   (B) mindestens einen in Wasser gelösten Härter ausgewählt aus organischen Verbindungen mit mindestens einer Carbodiimid-Gruppe,
   (C) mindestens ein nicht-ionisches oder anionisches Tensid ausgewählt aus organischen Verbindungen mit einem Molgewicht von weniger als 1000 g/mol,
   (D) mindestens ein Substratnetzmittel, das keine organische Verbindung gemäß der Komponente (C) darstellt,
   wobei die Dispersion einen Festkörperanteil nach DIN EN ISO 3251 von mindestens 10,0 Gew.-% aufweist.
2. Wässrige Dispersion nach Punkt 1, dadurch gekennzeichnet, dass die Dispersion eine statische Oberflächenspannung von weniger als 30,0 mNm⁻¹, vorzugsweise von weniger als 25,0 mNm⁻¹, besonders bevorzugt von weniger als 22,0 mNm⁻¹ gemessen nach der Platin-Ring-Methode bei 20°C aufweist.
3. Wässrige Dispersion nach einem oder beiden der vorherigen Punkte, dadurch gekennzeichnet, dass die Dispersion eine dynamische Oberflächenspannung von weniger als 45,0 mNm⁻¹, vorzugsweise von weniger als 40,0 mNm⁻¹, besonders bevorzugt von weniger als 35,0 mNm⁻¹ gemessen mittels Blasendruck-Tensiometer bei 20°C und einem Oberflächenalter von 0,030 Sekunden aufweist.
4. Wässrige Dispersion nach einem oder beiden der vorherigen Punkte, dadurch gekennzeichnet, dass die Dispersion eine dynamische Viskosität unterhalb von 200 mPas⁻¹, vorzugsweise unterhalb von 120 mPas⁻¹, besonders bevorzugt unterhalb von 80 mPas⁻¹ aufweist.
5. Wässrige Dispersion nach einem oder mehreren der vorherigen Punkte, dadurch gekennzeichnet, dass die wässrige Dispersion enthaltend das in Wasser dispergierte Polyurethanharz einen D90 Wert von weniger als 1,00 µm, vorzugsweise von weniger als 0,50 µm, besonders bevorzugt von weniger als 0,25 µm aufweist.
6. Wässrige Dispersion nach einem oder mehreren der vorherigen Punkte, dadurch gekennzeichnet, dass das mindestens eine in Wasser dispergierte Polyurethanharz eine Säurezahl von mindestens 8 mg KOH pro Gramm, vorzugsweise von mindestens 10 mg KOH pro Gramm aufweist, jedoch vorzugweise nicht oberhalb von 30 mg KOH pro Gramm, besonders bevorzugt nicht oberhalb von 24 mg KOH pro Gramm, insbesondere bevorzugt nicht oberhalb von 24 mg KOH pro Gramm jeweils bezogen auf das Polyurethanharz liegt.
7. Wässrige Dispersion nach einem oder mehreren der vorherigen Punkte, dadurch gekennzeichnet, dass der Anteil an Polyurethanharzen in der Dispersion mindestens 4 Gew.-%, vorzugsweise mindestens 8 Gew.-%, besonders bevorzugt mindestens 12 Gew.- % beträgt, jedoch vorzugweise nicht oberhalb von 30 Gew.-%, besonders bevorzugt nicht oberhalb von 20 Gew.-% liegt.
8. Wässrige Dispersion nach einem oder mehreren der vorherigen Punkte, dadurch gekennzeichnet, dass das dispergierte Polyurethanharz ausgewählt ist aus aliphatischen Polyurethanharzen, vorzugsweise auf Basis von Polyetherpolyolen, Polyesterpolyolen, Polycarbonatdiolen und/oder Polyoxyalkylen-modifizierten Alkandiolen, besonders bevorzugt auf Basis von Polycarbonatdiolen.
9. Wässrige Dispersion nach einem oder mehreren der vorherigen Punkte, dadurch gekennzeichnet, dass das dispergierte Polyurethanharz erhältlich ist durch Umsetzen eines freie Isocyanat-Gruppen aufweisenden aliphatischen Präpolymers mit einen aliphatischen Alkohol, der mindestens eine Carboxyl- und/oder Sulfonat-Gruppe aufweist und vorzugsweise ausgewählt ist aus Dimethylol-C2- bis C6-Alkansäuren.
10. Wässrige Dispersion nach Punkt 9, dadurch gekennzeichnet, dass das freie Isocyanat-Gruppen aufweisende aliphatische Präpolymer erhältlich ist durch Umsetzen mindestens eines aliphatischen Di- oder Triisocyanats, vorzugsweise Diisocyanats, mit mindestens einem mehrwertigen Alkohol ausgewählt aus Polyetherpolyolen, Polyesterpolyolen, Polycarbonatdiolen und/oder Polyoxyalkylen-modifizierten Alkandiolen, vorzugsweise mit mindestens zwei mehrwertigen Alkoholen, wobei mindestens ein mehrwertiger Alkohol ausgewählt ist aus der Gruppe bestehend aus Polyetherpolyolen, Polyesterpolyolen und/oder Polycarbonatdiolen und mindestens ein weiterer mehrwertiger Alkohol ausgewählt ist aus Polyoxyalkylen-modifizierten Alkandiolen, wobei die Umsetzung in einem solchen Mengenverhältnis zu erfolgen hat, dass aus der Summe der eingesetzten Isocyanate und der Summe der eingesetzten Alkohole ein molares Verhältnis NCO/OH von größer 1,1:1, jedoch vorzugsweise nicht größer als 2,5:1 resultiert.
11. Wässrige Dispersion nach einem oder mehreren der vorherigen Punkte, dadurch gekennzeichnet, dass das dispergierte Polyurethanharz insgesamt weniger als 0,20 Gew.- %, vorzugsweise weniger als 0,05 Gew.-% an freien NCO-Gruppen bestimmt nach DIN 53185 und jeweils bezogen auf den dispergierten Harzbestandteil aufweist.
12. Wässrige Dispersion nach einem oder mehreren der vorherigen Punkte, dadurch gekennzeichnet, dass der Härter ausgewählt ist aus Polycarbodiimiden mit zwei oder mehr Carbodiimid-Gruppen, vorzugsweise erhältlich aus Diisocyanaten, vorzugsweise aus aliphatischen Diisocyanaten, und mindestens einem Amin, vorzugsweise aliphatischen Amin, und/oder einem Polyether, vorzugsweise Polyethylenglykol.
13. Wässrige Dispersion nach einem oder mehreren der vorherigen Punkte, dadurch gekennzeichnet, dass der Härter ausgewählt ist aus Carbodiimiden mit einem Carbodiimid Äquivalentgewicht von weniger als 500 Gramm pro Mol Carbodiimid-Gruppen, jedoch von vorzugsweise mindestens 200 Gramm, besonders bevorzugt mindestens 300 Gramm pro Mol Carbodiimid-Gruppen, wobei die Carbodiimide vorzugsweise eine zahlenmittlere Molmasse von mindestens 1.500 g/mol, jedoch vorzugsweise von weniger als 50.000 g/mol aufweisen.
14. Wässrige Dispersion nach einem oder mehreren der vorherigen Punkte, dadurch gekennzeichnet, dass der Anteil an in Wasser gelösten Härter ausgewählt aus organischen Verbindungen mit mindestens einer Carbodiimid-Gruppe mindestens 0,50 Gew.-%, vorzugsweise mindestens 1,00 Gew.-%, besonders bevorzugt mindestens 1,50 Gew.-% beträgt, jedoch vorzugsweise nicht oberhalb von 5,0 Gew.-%, besonders bevorzugt nicht oberhalb von 3,0 Gew.-%, insbesondere bevorzugt nicht oberhalb von 2,50 Gew.-% liegt.
15. Wässrige Dispersion nach einem oder mehreren der vorherigen Punkte, dadurch gekennzeichnet, dass das Tensid ausgewählt ist aus organischen Verbindungen der allgemeinen Strukturformel (I) sowie deren wasserlöslichen Salze, vorzugsweise Alkali- und/oder Erdalkalimetallsalze: 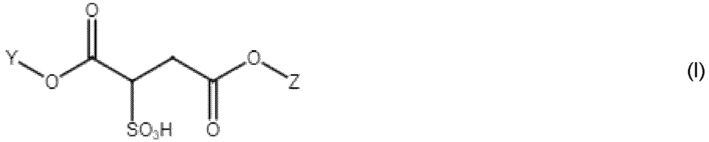 wobei Y und Z aliphatische Reste mit jeweils zumindest 4 Kohlenstoffatomen, vorzugsweise mit jeweils mindestens 6 Kohlenstoffatomen, jedoch jeweils nicht mehr als 14 Kohlenstoffatomen, vorzugsweise jeweils nicht mehr als 10 Kohlenstoffatomen darstellen, die jeweils verzweigt oder unverzweigt vorliegen können und unabhängig voneinander ausgewählt werden können.
16. Wässrige Dispersion nach einem oder mehreren der vorherigen Punkte, dadurch gekennzeichnet, dass das Tensid ausgewählt ist aus Sulfobernsteinsäure-bis(2-ethylhexyl)-ester sowie deren wasserlöslichen Salze, vorzugsweise Alkali- und/oder Erdalkalimetallsalze.
17. Wässrige Dispersion nach einem oder mehreren der vorherigen Punkte, dadurch gekennzeichnet, dass der Anteil des Tensids in der Dispersion mindestens 0,10 Gew.-%, vorzugsweise mindestens 0,20 Gew.-%, besonders bevorzugt mindestens 0,40 Gew.-% beträgt, jedoch vorzugsweise nicht oberhalb von 2,00 Gew.-%, besonders bevorzugt nicht oberhalb von 1,50 Gew.-% liegt.
18. Wässrige Dispersion nach einem oder mehreren der vorherigen Punkte, dadurch gekennzeichnet, dass das mindestens eine Substratnetzmittel ausgewählt ist aus Siloxanen, wobei die Siloxane wiederum vorzugsweise aus Trisiloxanen und/oder Polysiloxanen ausgewählt sind und besonders bevorzugt mindestens eine [-Si(CH₃)₂-O] Struktureinheit aufweisen.
19. Wässrige Dispersion nach Punkt 18, dadurch gekennzeichnet, dass die Siloxane ausgewählt sind aus Polyether-modifizierten Siloxanen, vorzugsweise aus polyoxoalkylierten, besonders bevorzugt aus polyethoxylierten Siloxanen.
20. Wässrige Dispersion nach einem oder mehreren der vorherigen Punkte, dadurch gekennzeichnet, dass der Anteil der Polyether-modifizierten Siloxane in der Dispersion mindestens 0,05 Gew.-%, vorzugsweise mindestens 0,10 Gew.-%, besonders bevorzugt mindestens 0,20 Gew.-% beträgt, jedoch vorzugsweise nicht oberhalb von 1,00 Gew.-%, besonders bevorzugt nicht oberhalb von 0,60 Gew.-% liegt.
21. Wässrige Dispersion nach einem oder mehreren der vorherigen Punkte, dadurch gekennzeichnet, dass die Dispersion insgesamt mindestens 2,0 Gew.-%, vorzugsweise insgesamt mindestens 4,0 Gew.-% der Lösemittel Aceton, Methylethylketon, Dimethylsulfoxid und/oder N.N'-Dimethylformamid enthält, wobei vorzugsweise Methylethylketon als Lösemittel ausgewählt ist.
22. Wässrige Dispersion nach einem oder mehreren der vorherigen Punkte, dadurch gekennzeichnet, dass die Dispersion insgesamt weniger als 10,0 Gew.-%, vorzugsweise insgesamt weniger als 8,0 Gew.-%, besonders bevorzugt insgesamt weniger als 6,0 Gew.-% der Lösemittel Aceton, Methylethylketon, Dimethylsulfoxid und/oder N.N'-Dimethylformamid, und vorzugsweise insgesamt weniger als 10,0 Gew.-%, besonders bevorzugt insgesamt weniger als 8,0 Gew.-%, insbesondere bevorzugt insgesamt weniger als 6,0 Gew.-% an organischen Verbindungen mit einem Siedepunkt unterhalb von 160°C bei Normaldruck (1013 mbar) enthält.
23. Verfahren zur Reparaturbeschichtung einer lackierten Metalloberfläche, die in zumindest einem Bereich der Lackierung einen Defekt aufweist, der darin besteht, dass gegenüber der außerhalb dieses Defektbereiches realisierten Lackschichtdicke eine mindestens reduzierte vorliegt, bei dem zur Erhöhung der Lackschichtdicke im Defektbereich zumindest dort eine wässrige Dispersion nach einem oder mehreren der vorherigen Punkte als Nassfilm aufgebracht und anschließend eingetrocknet wird.
24. Verfahren nach Punkt 23, dadurch gekennzeichnet, dass der Defektbereich entlang einer rillenförmigen Vertiefung in der Lackierung verläuft, wobei die Breite der Vertiefung orthogonal zum Rillenverlauf und zur Oberflächennormalen vorzugsweise geringer als 1000 µm, besonders bevorzugt geringer als 500 µm, jedoch vorzugsweise nicht geringer als 20 µm ist.
25. Verfahren nach einem oder beiden der Punkte 23 und 24, dadurch gekennzeichnet, dass die Dispersion im Sprühverfahren, vorzugsweise durch Zerstäubung, besonders bevorzugt durch luftlose Zerstäubung aufgebracht wird.
26. Verfahren nach Punkt 25, dadurch gekennzeichnet, dass die Auftragung der Dispersion bei einem Sprühdruck von mindestens 10 bar, vorzugsweise mindestens 15 bar, jedoch vorzugsweise unterhalb von 30 bar erfolgt.
27. Verfahren nach einem oder mehreren der vorherigen Punkte 23 bis 26, dadurch gekennzeichnet, dass die Trocknung bei einer Temperatur (PMT) oberhalb von 60 °C, vorzugsweise oberhalb von 80 °C, besonders bevorzugt oberhalb von 90 °C, jedoch vorzugsweise unterhalb von 160 °C, besonders bevorzugt unterhalb von 130 °C und insbesondere bevorzugt unterhalb von 100 °C erfolgt.
28. Verfahren nach einem oder mehreren der vorherigen Punkte 23 bis 27, dadurch gekennzeichnet, dass die lackierte Metalloberfläche eine Stahl-, Weißblech- oder Aluminiumoberfläche, insbesondere ein Weißblechoberfläche, darstellt.
29. Verfahren nach einem oder mehreren der vorherigen Punkte 23 bis 28, dadurch gekennzeichnet, dass die lackierte Metalloberfläche einen polaren Oberflächenenergieanteil gemessen bei 20 °C nach dem statischen Verfahren und berechnet nach der OWRK-Methode gemäß der DIN EN ISO 19403-2 von weniger als 2,0 mJm⁻², vorzugsweise von weniger als 1,0 mJm⁻² aufweist.
30. Verfahren nach einem oder mehreren der vorherigen Punkte 23 bis 29, dadurch gekennzeichnet, dass die lackierte Metalloberfläche eine Lackierung mit einem organischen Bindemittelsystem, vorzugsweise ausgewählt ist aus Epoxiden, Acrylaten, Polyester, Polyurethanen und/oder Polyolefinen, umfasst.
31. Verfahren nach einem oder mehreren der vorherigen Punkte 23 bis 30, dadurch gekennzeichnet, dass die lackierte Metalloberfläche die Oberfläche eines Dosendeckels, insbesondere eines Weißblechdosendeckels, darstellt.

## Patentansprüche

1. Wässrige Dispersion zur Reparaturbeschichtung unpolarer Oberflächen in Sprühverfahren enthaltend
(A) mindestens ein in Wasser dispergiertes Polyurethanharz ausgewählt aus Polyurethanharzen mit einer Säurezahl von mindestens 5 mg KOH pro Gramm,
(B) mindestens einen in Wasser gelösten Härter ausgewählt aus organischen Verbindungen mit mindestens einer Carbodiimid-Gruppe,
(C) mindestens ein nicht-ionisches oder anionisches Tensid ausgewählt aus organischen Verbindungen mit einem Molgewicht von weniger als 1000 g/mol,
(D) mindestens ein Substratnetzmittel, das keine organische Verbindung gemäß der Komponente (C) darstellt,
wobei die Dispersion einen Festkörperanteil nach DIN EN ISO 3251 von mindestens 10,0 Gew.-% aufweist.

2. Wässrige Dispersion nach Anspruch 1, **dadurch gekennzeichnet, dass** die Dispersion eine statische Oberflächenspannung von weniger als 30,0 mNm⁻¹, vorzugsweise von weniger als 25,0 mNm⁻¹, besonders bevorzugt von weniger als 22,0 mNm⁻¹ gemessen nach der Platin-Ring-Methode bei 20°C aufweist.

3. Wässrige Dispersion nach einem oder beiden der vorherigen Ansprüche, **dadurch gekennzeichnet, dass** die Dispersion eine dynamische Oberflächenspannung von weniger als 45,0 mNm⁻¹, vorzugsweise von weniger als 40,0 mNm⁻¹, besonders bevorzugt von weniger als 35,0 mNm⁻¹ gemessen mittels Blasendruck-Tensiometer bei 20°C und einem Oberflächenalter von 0,030 Sekunden aufweist.

4. Wässrige Dispersion nach einem oder mehreren der vorherigen Ansprüche, **dadurch gekennzeichnet, dass** der Anteil an Polyurethanharzen in der Dispersion mindestens 4 Gew.-%, vorzugsweise mindestens 8 Gew.-%, besonders bevorzugt mindestens 12 Gew.- % beträgt, jedoch vorzugweise nicht oberhalb von 30 Gew.-%, besonders bevorzugt nicht oberhalb von 20 Gew.-% liegt.

5. Wässrige Dispersion nach einem oder mehreren der vorherigen Ansprüche, **dadurch gekennzeichnet, dass** das dispergierte Polyurethanharz ausgewählt ist aus aliphatischen Polyurethanharzen, vorzugsweise auf Basis von Polyetherpolyolen, Polyesterpolyolen, Polycarbonatdiolen und/oder Polyoxyalkylen-modifizierten Alkandiolen, besonders bevorzugt auf Basis von Polycarbonatdiolen.

6. Wässrige Dispersion nach einem oder mehreren der vorherigen Ansprüche, **dadurch gekennzeichnet, dass** das dispergierte Polyurethanharz erhältlich ist durch Umsetzen eines freie Isocyanat-Gruppen aufweisenden aliphatischen Präpolymers mit einen aliphatischen Alkohol, der mindestens eine Carboxyl- und/oder Sulfonat-Gruppe aufweist und vorzugsweise ausgewählt ist aus Dimethylol-C2- bis C6-Alkansäuren.

7. Wässrige Dispersion nach einem oder mehreren der vorherigen Ansprüche, **dadurch gekennzeichnet, dass** der Härter ausgewählt ist aus Polycarbodiimiden mit zwei oder mehr Carbodiimid-Gruppen, vorzugsweise erhältlich aus Diisocyanaten, vorzugsweise aus aliphatischen Diisocyanaten, und mindestens einem Amin, vorzugsweise aliphatischen Amin, und/oder einem Polyether, vorzugsweise Polyethylenglykol.

8. Wässrige Dispersion nach einem oder mehreren der vorherigen Ansprüche, **dadurch gekennzeichnet, dass** der Härter ausgewählt ist aus Carbodiimiden mit einem Carbodiimid Äquivalentgewicht von weniger als 500 Gramm pro Mol Carbodiimid-Gruppen, jedoch von vorzugsweise mindestens 200 Gramm, besonders bevorzugt mindestens 300 Gramm pro Mol Carbodiimid-Gruppen, wobei die Carbodiimide vorzugsweise eine zahlenmittlere Molmasse von mindestens 1.500 g/mol aufweisen.

9. Wässrige Dispersion nach einem oder mehreren der vorherigen Ansprüche, **dadurch gekennzeichnet, dass** das Tensid ausgewählt ist aus organischen Verbindungen der allgemeinen Strukturformel (I) sowie deren wasserlöslichen Salze, vorzugsweise Alkali- und/oder Erdalkalimetallsalze: 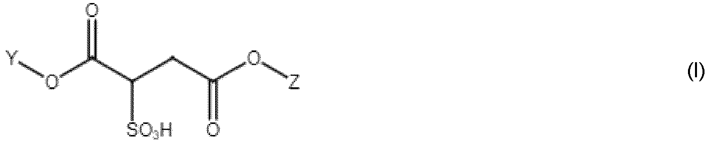 wobei Y und Z aliphatische Reste mit jeweils zumindest 4 Kohlenstoffatomen, vorzugsweise mit jeweils mindestens 6 Kohlenstoffatomen, jedoch jeweils nicht mehr als 14 Kohlenstoffatomen, vorzugsweise jeweils nicht mehr als 10 Kohlenstoffatomen darstellen, die jeweils verzweigt oder unverzweigt vorliegen können und unabhängig voneinander ausgewählt werden können, insbesondere bevorzugt ausgewählt aus Sulfobernsteinsäure-bis(2-ethylhexyl)-ester sowie deren wasserlöslichen Salze, vorzugsweise Alkali- und/oder Erdalkalimetallsalze.

10. Wässrige Dispersion nach einem oder mehreren der vorherigen Ansprüche, **dadurch gekennzeichnet, dass** das mindestens eine Substratnetzmittel ausgewählt ist aus Siloxanen, wobei die Siloxane wiederum vorzugsweise aus Trisiloxanen und/oder Polysiloxanen ausgewählt sind und besonders bevorzugt mindestens eine [-Si(CH₃)₂-O] Struktureinheit aufweisen.

11. Wässrige Dispersion nach Anspruch 17, **dadurch gekennzeichnet, dass** die Siloxane ausgewählt sind aus Polyether-modifizierten Siloxanen, vorzugsweise aus polyoxoalkylierten, besonders bevorzugt aus polyethoxylierten Siloxanen.

12. Wässrige Dispersion nach einem oder mehreren der vorherigen Ansprüche, **dadurch gekennzeichnet, dass** die Dispersion insgesamt mindestens 2,0 Gew.-%, vorzugsweise insgesamt mindestens 4,0 Gew.-% der Lösemittel Aceton, Methylethylketon, Dimethylsulfoxid und/oder N.N'-Dimethylformamid enthält, wobei vorzugsweise Methylethylketon als Lösemittel ausgewählt ist.

13. Wässrige Dispersion nach einem oder mehreren der vorherigen Ansprüche, **dadurch gekennzeichnet, dass** die Dispersion insgesamt weniger als 10,0 Gew.-%, vorzugsweise insgesamt weniger als 8,0 Gew.-%, besonders bevorzugt insgesamt weniger als 6,0 Gew.-% der Lösemittel Aceton, Methylethylketon, Dimethylsulfoxid und/oder N.N'-Dimethylformamid, und vorzugsweise insgesamt weniger als 10,0 Gew.-%, besonders bevorzugt insgesamt weniger als 8,0 Gew.-%, insbesondere bevorzugt insgesamt weniger als 6,0 Gew.-% an organischen Verbindungen mit einem Siedepunkt unterhalb von 160°C bei Normaldruck (1013 mbar) enthält.

14. Verfahren zur Reparaturbeschichtung einer lackierten Metalloberfläche, die in zumindest einem Bereich der Lackierung einen Defekt aufweist, der darin besteht, dass gegenüber der außerhalb dieses Defektbereiches realisierten Lackschichtdicke eine mindestens reduzierte vorliegt, bei dem zur Erhöhung der Lackschichtdicke im Defektbereich zumindest dort eine wässrige Dispersion nach einem oder mehreren der vorherigen Ansprüche als Nassfilm aufgebracht und anschließend eingetrocknet wird.

15. Verfahren nach Anspruch 14, **dadurch gekennzeichnet, dass** die lackierte Metalloberfläche eine Stahl-, Weißblech- oder Aluminiumoberfläche, vorzugsweise ein Weißblechoberfläche, ist, wobei die lackierte Metalloberfläche vorzugsweise die Oberfläche eines Dosendeckels, insbesondere eines Weißblechdosendeckels, darstellt.
